Europäisches Patentamt

European Patent Office

Office européen des brevets

(11) Veröffentlichungsnummer: **0 279 935**
**A2**

## EUROPÄISCHE PATENTANMELDUNG

(21) Anmeldenummer: 87118473.5

(22) Anmeldetag: **14.12.87**

(51) Int. Cl.4: **B64D 27/08** , B64C 27/12

(30) Priorität: **27.02.87 DE 3706379**

(43) Veröffentlichungstag der Anmeldung:
**31.08.88 Patentblatt 88/35**

(84) Benannte Vertragsstaaten:
**DE FR GB IT SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Von Broock, Ulrich, Dr. Dipl.-Ing.**
**Eberdinger Strasse 58**
**D-7251 Weissach(DE)**

(54) **Aufhängungssystem für ein Antriebsaggregat eines Hubschraubers.**

(57) Es wird ein Aufhängungssystem mit elastischen Lagern für ein Antriebsaggregat eines Hubschraubers beschrieben, das einen zwischen einer Ausgangswelle und einem Hauptrotor angeordneten Riementrieb aufweist. Dieser Riementrieb umfasst eine mit der Ausgangswelle verbundene erste Trommel und eine mit einem Winkeltrieb verbundene zweite Trommel und beide Trommeln sind über einen spannbaren Riemen antriebsverbunden. Das Aufhängungssystem umfasst mindestens zwei Lager im Bereich der Riementrommel sowie ein weiteres Lager an dem den Riementrommeln abgewandten Enden des Aggregats 1. Die drei Lager weisen eine die Starrkörperbewegungen des Aggregats vorgebende Federsteifigkeits-Abstimmung auf. Diese Abstimmung ist derart, daß begrenzte Schwenkbewegungen des Aggregats um die Längsachsen der Riementrommeln sowie parallele Hubbewegungen des Aggregats in Hochrichtung durchführbar sind.

FIG. 2

EP 0 279 935 A2

## Aufhängungssystem für ein Antriebsaggregat eines Hubschraubers

Die Erfindung bezieht sich auf ein Aufhängungssystem nach dem Oberbegriff des Anspruchs 1.

Es ist ein Antriebskonzept eines Hubschraubers bekannt geworden, das eine mit der Getriebeausgangswelle verbundene erste Riementrommel und eine mit einem Winkelgetriebe des Hauptrotors verbundene zweite Riementrommel umfasst. Ein die beiden Trommeln umschließender Flachriemen treibt das über dem Motor liegendes Winkelgetriebe und somit den Hauptrotor an. Beim Starten des Motors ist zum Abkoppeln des Massenträgheitsmoments vom Motor der Riemen umgespannt. Danach spannt der Pilot über eine Vorrichtung den Riemen, wodurch der Rotor in Drehung versetzt wird.

Durch die Spannung des Riemens wird der Motor nach oben gezogen und durch das gleichzeitig auftretende Abtriebsmoment verdreht er sich in seiner elastischen Aufhängung um seine Längsachse. Dadurch verliert die untere Riementrommel ihre Parallelität zur oberen Riementrommel, und ein ruhiger und verschleißarmer Riemenlauf ist nicht mehr gewährleistet. Zur Vermeidung dieser Nachteile sind bei der bekannten Aufhängung des Hubschraubermotors Gummi-Metallelemente mit extrem harten Federsteifigkeiten vorgesehen, die das Gewicht tragen und das Drehmoment abstützen sollen. Eine zusätzliche elastische Stütze, die die beiden Riementrommeln miteinander verbindet, soll deren exakte Positionierung sicherstellen.

Die verwendeten Lagerelemente mit einer extrem hohen Federsteifigkeit lassen somit keine befriedigende Isolation der motorseitigen Vibrationen mehr zu.

Aufgabe der Erfindung ist es, ein verbessertes elastisches Aufhängungssystem für ein Antriebsaggregat eines Hubschraubers zu schaffen, das eine Isolation der vom Motor angeregten Vibrationen gewährleistet und trotzdem eine exakte Ausrichtung der Riementrommel für einen ruhigen Riemenlauf sicherstellt.

Diese Aufgabe wird erfindungsgemäß durch die kennzeichnenden Merkmale des Anspruchs 1 gelöst. Weitere vorteilhafte Merkmale der Erfindung beinhalten die Unteransprüche.

Die mit der Erfindung erzielten Vorteile bestehen im wesentlichen darin, daß auch bei Verwendung von weichen gut isolierenden Lagern die Parallelität der Riementrommeln sichergestellt wird. Die Anordnung der Lager am Motor und die Abstimmung der Steifigkeiten lassen nur Starrkörperbewegungen zu, die sich nicht nachteilig auf den Riemenlauf auswirken.

So wird zugelassen, daß der Motor um die Längsachsen der beiden Riementrommeln - schwenken kann, und eine parallele Hubbewegung des Aggregats in Grenzen möglich wird. Unterbunden wird dagegen ein Drehen des Motors um seine Querachse (Nicken) und um seine Hochachse (Gieren) sowie ein axiales Verschieben in Richtung der Kurbelwelle.

Zwischen den beiden Riementrommeln kann eine zusätzliche Stütze vorgesehen sein, die die Riemenspannung aufnimmt und die bei verschiedenen Lastzuständen die Riementrommeln parallel zueinander ausrichtet. Ein Entfall der Stütze ist bei einer Stärkung der Ausgangswelle ohne weiteres möglich.

Ein Ausführungsbeispiel der Erfindung ist in der Zeichnung dargestellt und wird im folgenden näher beschrieben.

Es zeigen:

Fig. 1 eine Seitenansicht eines in drei elastischen Lagern gelagerten Hubschraubermotors mit rückseitigen Riementrommeln,

Fig. 2 eine Draufsicht auf den Motor gemäß Fig. 1,

Fig. 3 eine Rückansicht des Motors mit den zugelassenen Starrkörperbewegungen,

Fig. 4 eine schematische Darstellung der Riementrommeln mit einer zugelassenen Abweichung der Parallellität, und

Fig. 5 der untere Teil einer Stütze mit Anschlußteil und Zylinderlager.

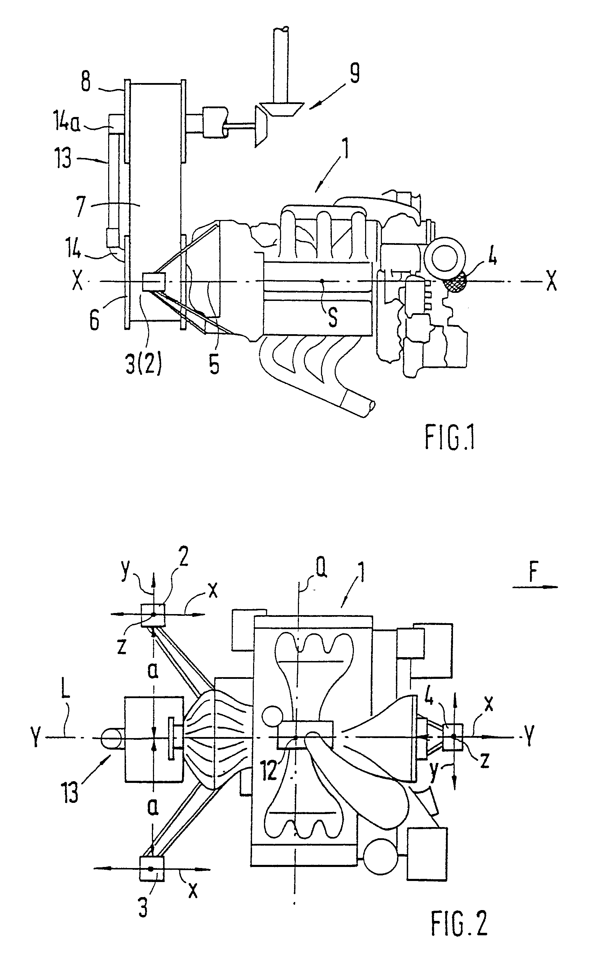

In den Fig. 1 und 2 ist ein Aufhängungssystem für ein Antriebsaggregat 1 eines Hubschraubers dargestellt, das in drei Lager 2, 3 und 4 zellenseitig abgestützt ist. Mit dem Aggregat 1 ist über eine Ausgangswelle 5 eine erste Riementrommel 6 verbunden, die über einen Flachriemen 7 mit einer zweiten Riementrommel 8 antriebsverbindbar ist. Diese zweite Trommel 8 treibt über ein Winkelgetriebe 9, das schematisch angedeutet ist, einen Hauptrotor an. Die Ausgangswelle 5 kann die Kurbelwelle oder die Getriebeausgangswelle sein.

Das Aufhängungssystem umfasst mindestens zwei Lager 2 und 3 im Bereich der Riementrommeln 6 und 7, die - in Flugrichtung F gesehen - am hinteren Ende des Aggregats 1 angeordnet sind. Ein weiteres Lager 4 ist an dem den Riementrommeln 6 und 7 abgewandten Ende des Aggregats 1 angeordnet.

Die drei Lager 2, 3 und 4 sind in einer horizontalen Ebene X-X mit der Ausgangswelle 5 gehalten, wobei diese Ebene X-X etwa in Höhe des Schwerpunkts S des Aggregats 1 liegt. In bezug auf die Längsmittelachse L des Aggregats 1 sind die beiden Lager 2 und 3 zu dieser Achse mit einem gleichen Abstand a angeordnet, wobei das einzige Lager 4 in der Längsmittelachse L liegt.

Zur gezielten Abstimmung der Starrkörperbewegungen des Aggregats 1 weisen die einzelnen elastischen Lager 2, 3 und 4 folgende Federsteifigkeiten auf: Lager 2 und 3 weisen in Richtung x, die der Flugrichtung F entspricht, und in Querrichtung y eine weitere Federsteifigkeit auf als in Hochrichtung z. Sie dienen zur Drehmomentabstützung sowie zur Aufnahme von Riemenvorspannkräften. Das Lager 4 weist in Hochrichtung z und in Querrichtung y eine weichere Federsteifigkeit auf als in Richtung x. Die weichere Kennung in Hochrichtung z ist möglich, da dieses Lager keine wesentliche Last trägt. Es muß dagegen in Flugrichtung F hart ausgeführt sein, damit keine Verschiebung des Aggregats 1 in die Flugrichtung F erfolgen kann und somit die Trommeln keine in axialer Richtung verschobene Position einnehmen können.

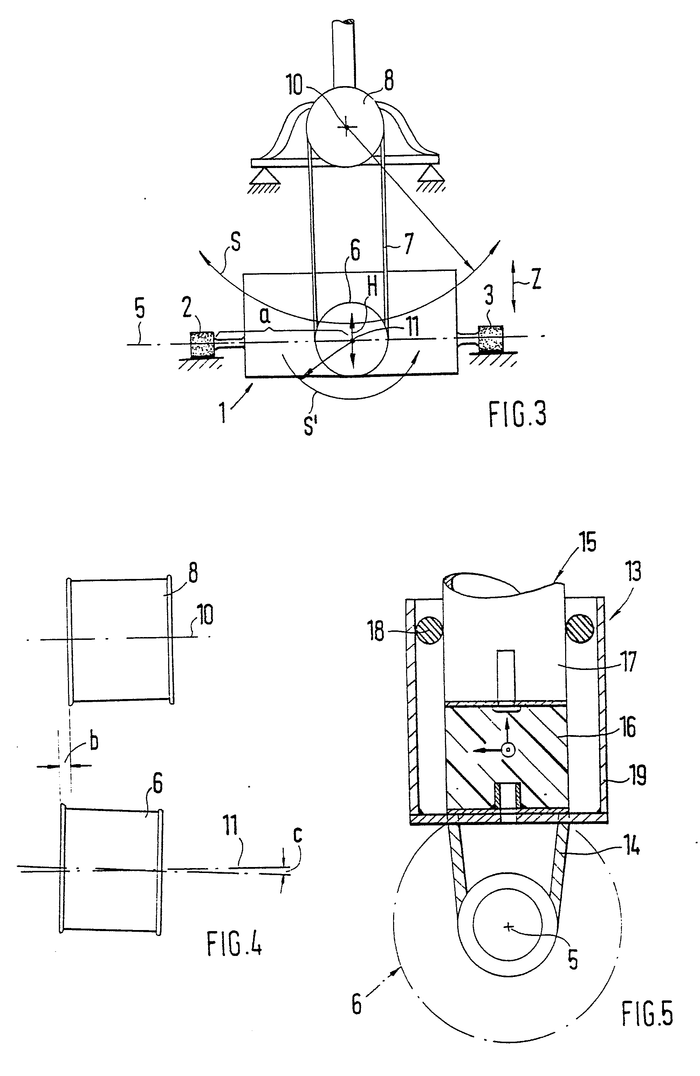

Wie in Fig. 3 näher dargestellt ist, wird durch die Abstimmung der Lagerkennung eine gezielte Bewegung des Aggregats 1 zugelassen. So kann es bei Anregung eine Schwenkbewegung S um die Achse 10 der oberen Riementrommel 8 und eine Schwenkbewegung S' um die Achse 11 der Riementrommel 6 und eine parallele Hubbewegung H in Hochrichtung z durchführen, ohne daß Funktionseinbußen entstehen. Die Steifigkeitsabstimmung der Lager 2, 3 und 4 vermeiden ein Drehen des Aggregats 1 um eine Querachse Q (Nicken) um eine Hochachse 12 (Gieren) und ein axialer Verschieben in Richtung der Kurbelwelle.

Durch die abgestimmten Lager 2, 3 und 4 wird, wie Fig. 4 schematisch zeigt, ein solcher Verlauf der beiden Achse 10 und 11 der Riementrommel 8 und 6 in der Weise zueinander sichergestellt, daß nur innerhalb der zulässigen Grundwerte b und c eine Verstellung der Achse 11 zur Achse 10 erfolgen kann.

Die Trommeln 6 und 8 sind über eine Stütze 13 untereinander verbunden, wie insbesondere Fig. 1 näher zeigt. Sie umfasst ein unteres Anschlußteil 14, das mit der unteren Trommel 6 verbunden ist. Zwischen diesem Anschlußteil 14 und einer Stange 15, die endseitig über ein weiteres Anschlußteil 14a an der weiteren Trommel 8 befestigt ist, ist ein elastisches Zylinderlager 16 vorgesehen. Es ist in Hochrichtung relativ hart und in den radialen Richtungen mit einer wesentlich weicheren Federsteifigkeit ausgeführt. Das untere Anschlußteil 14 der Stütze 13 besteht aus einer zylindrischen Hülse 19, in der ein unteres Ende 17 der Stange über mindestens einen elastischen Ring 18 gegen ein Knicken abgestützt wird.

Die Stütze 13 ist aus Festigkeitsgründen erforderlich. Sie könnte aber bei einer Änderung des Getriebes, insbesondere der Ausgangswelle 5, entfallen, wenn diese entsprechend den auftretenden Querkräftgen dimensioniert wird. Ein Entfall der Stütze 13 würde die Wirkung des erfindungsgemäßen Aufhängungssystems nicht beeinträchtigen.

## Ansprüche

1. Aufhängungssystem mit elastischen Lagern für ein Antriebsaggregat eines Hubschraubers, das einen zwischen einer Ausgangswelle und einem Hauptrotor angeordneten Riementrieb aufweist, der eine mit der Ausgangswelle verbundene erste Trommel und eine mit einem Winkeltrieb verbundene zweite Trommel umfasst und die Trommeln über einen spannbaren Riemenantrieb verbunden sind, dadurch gekennzeichnet, daß das Aufhängungssystem mindestens zwei Lager (2, 3) im Bereich der Riementrommeln (6, 8) und ein weiteres Lager (4) an dem den Riementrommeln (6, 8) abgewandten Ende des Aggregats (1) aufweist und die Lager (2, 3, 4) eine Federsteifigkeits-Abstimmung in den Richtungen (x, y und z) aufweisen, derart, daß begrenzte Schwenkbewegungen (S, S') des Aggregats (1) um die Längsachsen (10, 11) der Riementrommeln (8 und 6) sowie parallele Hubbewegungen (H) in Hochrichtung (Z) ermöglicht werden.

2. Aufhängungssystem nach Anspruch 1, gekennzeichnet durch die Kombination folgender Merkmal:

a) die drei Lager (2, 3 und 4) sind in einer horizontalen Ebene (X-X) mit der Ausgangswelle (5) angeordnet;

b) die horizontale Ebene (X-X) liegt etwa in Höhe des Schwerpunktes (S) des Antriebsaggregats (1);

c) das einzige Lager (4) ist in einer senkrechten Ebene (Y-Y) mit der Ausgangswelle (5) des Getriebaggregats (1) angeordnet;

d) die beiden weiteren Lager (2, 3) sind mit einem gleichen Abstand (a) zur Längsmittelachse (L) des Antriebsaggregats (1) gehalten.

3. Aufhängungssystem nach den Ansprüchen 1 oder 2, dadurch gekennzeichnet, daß

a) die Lager (2 und 3) in Flugrichtung (F) bzw. (x) und in Querrichtung (y) eine weichere Federsteifigkeit aufweisen als in Hochrichtung (z), und

b) daß das Lager (4) in Hochrichtung (z) und in Querrichtung (y) eine weiche Federsteifigkeit aufweist, dagegen in Flugrichtung (F) bzw. (x) hart ausgeführt ist.

4. Aufhängungssystem nach einem oder mehreren der vorhergehenden Ansprüche, dadurch gekennzeichnet, daß eine Stütze (13) zwischen einem Anschlußteil (14) an der unteren Riementrommel (6) und einem weiteren Anschlußteil (14a) an der oberen Riementrommel (8) vorgesehen ist.

5. Aufhängungssystem nach Anspruch 4, dadurch gekennzeichnet, daß die Stütze (13) eine Stange (15) umfasst, die unter Zwischenschaltung eines elastischen Zylinderlagers (16) mit dem Anschlußteil (14) verbunden ist und das Lager (16) in Hochrichtung relativ hart und in radialer Richtung relativ weich ausgeführt ist.

6. Aufhängungssystem nach den Ansprüchen 4 oder 5, dadurch gekennzeichnet, daß das Anschlußteil (14) eine zylindrische Hülse (19) umfasst, in der ein unteres Ende (17) der Stange (15) über mindestens einen elastischen Ring (18) abgestützt gehalten ist.

AB 72₁

FIG.1

FIG.2

FIG.3

FIG.4

FIG.5